# EUROPÄISCHE PATENTSCHRIFT

(11) **EP 2 880 402 B1**
(45) Veröffentlichungstag und Bekanntmachung des Hinweises auf die Patenterteilung: **10.04.2019**
(21) Anmeldenummer: 13730155.2
(22) Anmeldetag: 11.06.2013
(51) Int. Cl.: G01C 21/34, G01C 21/36

(54) **VERFAHREN UND VORRICHTUNG ZUM BESTIMMEN EINER BEVORZUGTEN ROUTE ZWISCHEN EINEM STARTPUNKT UND EINEM ZIELPUNKT**
METHOD AND DEVICE FOR THE DETERMINATION OF A PREFERRED ROUTE BETWEEN AN ORIGIN AND A DESTINATION
MÉTHODE ET DISPOSITIF POUR DÉTERMINER UND ROUTE PRÉFÉRÉE ENTRE UN POINT D'ORIGINE ET UN POINT DE DESTINATION

(30) Priorität: 30.07.2012 DE 102012213357
(43) Veröffentlichungstag der Anmeldung: 10.06.2015
(73) Patentinhaber: Robert Bosch GmbH, 70442 Stuttgart (DE)
(72) Erfinder: KNIEP, Stefan Andreas, 31141 Hildesheim (DE); WEILKES, Michael, 31199 Diekholzen (DE); BERSINER, Lutz, 31139 Hildesheim (DE)
(86) Internationale Anmeldenummer: PCT/EP2013/061967
(87) Internationale Veröffentlichungsnummer: WO 2014/019750

(56) Entgegenhaltungen:
- WO-A1-2007/075284
- WO-A1-2011/124274
- US-A1- 2005 021 228
- US-A1- 2009 248 295

## Beschreibung

### Stand der Technik

Die vorliegende Erfindung bezieht sich auf ein Verfahren zum Bestimmen einer bevorzugten Route zwischen einem Startpunkt und einem Zielpunkt, auf eine entsprechende Vorrichtung sowie auf ein entsprechendes Computerprogrammprodukt.

Navigationssysteme können Alternativen zu einer zuvor berechneten Route ermitteln und darstellen, und zwar ausgehend von einer Eingabe des Nutzers, durch die Teile der zuvor berechneten Route ausgeschlossen werden. Bekannt sind ferner Navigationssysteme, die Ausschlüsse zuvor berechneter Routenteile aufgrund von empfangenen Verkehrsinformationen selbsttätig vornehmen. Daneben werden grafische Verfahren eingesetzt, die einer zuvor berechneten Route einen oder mehrere neue Routenpunkte hinzufügen und damit die Berechnung einer Alternativroute erzwingen.

Die EP 1 307 707 B1 zeigt ein Verfahren zur Routenberechnung von einem Startort zu einem Zielort. Darin wird ein Durchgangszielpunkt bestimmt, der in einem durch ein vorgegebenes Kriterium bestimmten Umkreis eines Durchgangszielorts liegt. Es wird eine Route über den Durchgangszielpunkt berechnet.

Die US 2005/0021228 A1 befasst sich mit einem Verfahren zum Suchen einer Route in einem Navigationssystem. Die WO 2007/075284 A1 befasst sich mit einem Verfahren, das es einem Nutzer ermöglicht, eine Vorliebe für ein Route anzuzeigen, wenn mehrere alternative Routen zur Verfügung stehen. Die US 2005/0021228 A1 befasst sich mit einer Geländeüberlagerung für Routenplaner.

Die WO2011/124274 A1 offenbart die Eingabe einer zu vermeidenden oder bevorzugt zu durchfahrenden Region mittels mehreren Wischbewegungen auf einem Touchscreen eines Navigationsgerätes.

### Offenbarung der Erfindung

Vor diesem Hintergrund wird mit der vorliegenden Erfindung ein Verfahren zum Bestimmen einer bevorzugten Route zwischen einem Startpunkt und einem Zielpunkt, weiterhin eine Vorrichtung, die dieses Verfahren verwendet sowie schließlich ein entsprechendes Computerprogrammprodukt gemäß den unabhängigen Ansprüchen 1, 4 und 5 vorgestellt. Vorteilhafte Ausgestaltungen ergeben sich aus den jeweiligen abhängigen Ansprüchen und der nachfolgenden Beschreibung.

Ein Verfahren zur Bedienung eines Navigationssystems im Fahrzeug über eine grafische Benutzerschnittstelle kann einen Nutzerwunsch nach Berechnung einer Alternativroute erkennen. Ferner kann ein solches Verfahren eine vom Nutzer bevorzugte Region erkennen, ohne dass einzelne Elemente der Region bevorzugt werden. Diese Region kann zur Alternativroutenberechnung verwendet werden. Unter dieser Maßgabe kann eine optimale Route ermittelt werden. Vorgegebene Kostengrößen wie Reisezeit, Streckenlänge oder Energieverbrauch oder einer Kombination hieraus können in die Routenberechnung einfließen.

Gemäß dem hierin vorgeschlagenen Verfahren braucht also ein Fahrer eines Fahrzeuges keine exakte Eingabe von Routenpunkten mehr vorzunehmen. Folglich ist die Aufmerksamkeit des Nutzers bei der Bedienung des Navigationssystems nur kurzzeitig und mit begrenzter Präzision erforderlich. Ferner kann innerhalb der vorgegebenen Region die Berechnung der optimalen Route gemäß einer vorgegebenen Kostengröße erfolgen. Ein Punkt des Verlassens der ursprünglichen Route und des möglichen Wiedereintritts kann innerhalb der bevorzugten Region ebenfalls optimal berechnet werden.

Der Fahrer eines Fahrzeuges kann gemäß dem hier vorgestellten Konzept während der Fahrt die Ermittlung einer Alternativroute gemäß eigenen Vorgaben veranlassen, ohne aufwendige Eingaben vornehmen zu müssen. Bevorzugt der Fahrer bzw. Nutzer des Verfahrens z. B. nur eine bestimmte Region, die bei der Routenberechnung berücksichtigt werden soll, oder möchte er z. B. eine Großstadt in einer bestimmten Himmelsrichtung umfahren, kann dies durch eine einfache Aktion auf einer Benutzerschnittstelle, die mit einer das Verfahren ausführenden Vorrichtung verbunden ist, umgesetzt werden. So erübrigt sich für den Nutzer des Verfahrens eine explizite Eingabe eines exakten Routenpunktes und er kann sich voll und ganz seiner Fahraufgabe widmen. Somit kann wirksam vermieden werden, dass bei der Routenberechnung unter Umständen sehr ungünstige Straßenstücke verwendet werden, die nur der Erreichung eines eigentlich gar nicht wichtigen zusätzlichen Routenpunktes dienen und so eventuell Alternativrouten ermittelt werden, die den Wünschen des Nutzers nicht entsprechen und sogar zuwiderlaufen. Stattdessen kann mit dem hier vorgestellten Verfahren und einer entsprechenden Vorrichtung eine eventuell vorhandene Ortskenntnis bei der Routenbestimmung genutzt werden, ohne dass diese notwendig wäre. Auch persönliche Vorlieben können durch das hier vorgestellte Verfahren und eine entsprechende Vorrichtung berücksichtigt werden.

Ein Verfahren zum Bestimmen einer bevorzugten Route zwischen einem Startpunkt und einem Zielpunkt weist die folgenden Schritte auf:
Erfassen einer auf eine digitale Karte bezogenen Zwischenzieleingabe eines Benutzers, wobei die Zwischenzieleingabe einen Wunsch des Benutzers nach einem Durchfahren einer in der digitalen Karte dargestellten bevorzugten Region zwischen dem Startpunkt und dem Zielpunkt repräsentiert;
Zuordnen der Zwischenzieleingabe zu einem der bevorzugten Region zugrunde liegenden Straßennetzbereich in der digitalen Karte; und
Verwenden zumindest eines in dem Straßennetzbereich enthaltenen Streckenabschnitts in einer Routenbestimmung zwischen dem Startpunkt und dem Zielpunkt, um die bevorzugte Route zu bestimmen.

Bei dem Startpunkt kann es sich um einen Ausgangspunkt für eine Fahrt mit einem Fahrzeug handeln. Es kann sich dabei um einen kartografierten Ort - z. B. ein Zuhause eines Benutzers des Verfahrens - handeln. Auch bei dem Zielpunkt kann es sich um einen kartografierten Ort handeln, der ein Endziel oder ein Zwischenziel der Fahrt mit dem Fahrzeug darstellen kann. Als die bevorzugte Route kann eine alternative Zielführung auf einem Straßennetz zwischen dem Startpunkt und dem Zielpunkt verstanden werden, die dem Benutzer des Verfahrens mehr zusagt als eine ursprünglich von dem Navigationsgerät ermittelte Route. Dabei kann die in der digitalen Karte dargestellte bevorzugte Region durchfahren werden. Gründe für die Bevorzugung einer bestimmten Region durch den Benutzer können z. B. sein, dass der Benutzer bzw. der Fahrer des Fahrzeugs ein abseits der ursprünglichen Route gelegenes landschaftlich reizvolles Gebiet auf seiner Fahrt zum Zielpunkt durchfahren oder aber einen verkehrsreichen Ballungsraum großräumig umfahren möchte. Auch kann es sein, dass der Fahrer z. B. aufgrund einer Störung auf der ursprünglichen Route ohnehin auf eine Alternativroute ausweichen muss und diese nach seinen Vorstellungen gestalten möchte. Die bevorzugte Region kann als ein zusammenhängender Bereich in der digitalen Karte betrachtet werden, dessen Umfang und Form der Benutzer des Verfahrens entsprechend seinen Wünschen bzw. Bedürfnissen mittels der Zwischenzieleingabe in eine das Verfahren ausführende Vorrichtung zumindest teilweise vorgeben kann. Der Schritt des Erfassens kann so verstanden werden, dass eine vom Benutzer ausgeführte Zwischenzieleingabe, beispielsweise eine Fingerbewegung des Benutzers, unter Verwendung einer Sensoreinrichtung direkt erfasst wird. Alternativ kann der Schritt des Erfassens so verstanden werden, dass die von dem Benutzer ausgeführte Zwischenzieleingabe über eine Schnittstelle zwischen einer die Schritte des Verfahrens umsetzenden Vorrichtung und einer Sensoreinrichtung erfasst wird, mit der beispielsweise eine Fingerbewegung des Benutzers detektiert werden kann. In diesem Fall kann die Zwischenzieleingabe umfassen, z. B. eine Gleitbewegung mindestens eines Fingers des Benutzers über eine Eingabeeinrichtung zu verfassen, die eine durchgeführte Eingabe des Benutzers repräsentieren. Als die Zwischenzieleingabe ist hier somit eine von dem Benutzer quasi "gezeichnete" geometrische Figur, z. B. eine Gerade oder eine geschwungene Linie, zu verstehen. Dabei kann sich die bevorzugte Region beispielsweise dadurch auszeichnen, dass sie sich um die Zwischenzieleingabe herum erstreckt und somit deren Form im Wesentlichen abbildet. Die bevorzugte Route kann auch ohne Bestehen einer ursprünglichen Route bestimmt werden. Die bevorzugte Route kann sich aus einem oder mehreren Streckenabschnitten in einem Straßennetz zusammensetzen, von denen einer oder mehrere auch deckungsgleich mit einer ursprünglichen Route sein können. Die bevorzugte Route schneidet an mindestens zwei Punkten die ursprüngliche Route, falls eine solche existiert. Bei der digitalen Karte kann es sich um eine digitalisierte Straßennetzkarte eines vorbestimmten Gebietes, beispielsweise eines Landes oder einer geografischen Region, handeln. Die digitale Karte kann z. B. in Navigationsgeräten für Fahrzeuge in Verbindung mit satellitengestützter Ortsbestimmung zur Routenführung zwischen dem Startpunkt und dem Zielpunkt eingesetzt werden und neben dem Straßennetz z. B. auch eine Topografie oder Markierungen von Sehenswürdigkeiten des vorbestimmten Gebietes aufweisen. Die von dem Benutzer des Verfahrens vorgenommene Zwischenzieleingabe kann beispielsweise mittels eines der Vorrichtung zugeordneten Sensors erfasst werden. Bei dem der bevorzugten Region zugrunde liegenden Straßennetzbereich kann es sich um einen Ausschnitt aus einem Gesamtstraßennetz des in der digitalen Karte ausgewiesenen geografischen Gebietes handeln. Der Straßennetzbereich kann im Wesentlichen einen Umfang aufweisen, der einer Form der durch die Zwischenzieleingabe definierten bevorzugten Region entspricht. Der Schritt des Zuordnens kann mittels eines Algorithmus in einer das Verfahren ausführenden Vorrichtung durchgeführt werden. Der Streckenabschnitt kann eine Straße oder eine Mehrzahl von Straßen in dem Straßennetzbereich umfassen. Der Straße oder der Mehrzahl von Straßen kann eine Straßenklasse oder eine Mehrzahl von Straßenklassen zugeordnet sein. In dem Schritt des Verwendens kann z. B. derjenige Streckenabschnitt oder eine Mehrzahl der derjenigen Streckenabschnitte in dem Straßennetzbereich zur Routenbestimmung ausgewählt werden, der bzw. die der z. B. als Linie bereitgestellten Zwischenzieleingabe in der digitalen Karte am nächsten liegt bzw. liegen. Die Routenbestimmung kann wiederum mittels eines geeigneten Algorithmus in einer das Verfahren ausführenden Vorrichtung durchgeführt werden. Die Routenbestimmung kann dabei unterschiedlichen Kostenfunktionen unterliegen, die sich auf die Auswahl der für die bevorzugte Route auszuwählenden Streckenabschnitte zusätzlich auswirken können. Je ein Anfangspunkt und ein Endpunkt der bevorzugten Route fallen mit Punkten auf einer eventuell vorhandenen ursprünglich berechneten Route zusammen, um zu gewährleisten, dass die alternative Zielführung das Fahrzeug an geeigneter Position in die bevorzugte Region hineinführt und am Ende der bevorzugten Region möglichst ohne Umwege wieder auf die ursprüngliche Route zurückführt.

Gemäß der Erfindung wird in dem Schritt des Erfassens eine Gleitbewegung mindestens eines Fingers des Benutzers über eine Eingabeeinrichtung als die Zwischenzieleingabe erfasst. Bei der Eingabeeinrichtung kann es sich um ein Tastfeld oder einen Berührungsbildschirm eines das Verfahren ausführenden Steuergeräts, z. B. eines Navigationsgeräts, handeln. Bei der Gleitbewegung kann der Finger oder eine Hand des Benutzers eine Oberfläche der Eingabeeinrichtung berühren oder sich knapp oberhalb dieser bewegen. Bei Verwendung eines Tastfelds kann die Gleitbewegung eine entsprechende Bewegung eines Cursors bzw. einer Einfügemarke über einen die digitale Karte abbildenden Bildschirm z. B. des Navigationsgeräts bewirken. Bei Verwendung eines Berührungsbildschirms kann die Gleitbewegung direkt auf bzw. über dessen Oberfläche ausgeführt und simultan auf diesem angezeigt werden. Die Gleitbewegung kann mit einem Finger einer Hand oder der gesamten Hand des Benutzers ausgeführt werden, wobei bei der Verwendung der gesamten Hand quasi eine Wischbewegung der Hand über die Eingabeeinrichtung oder einen Bereich der Eingabeeinrichtung hinweg ausgeführt werden kann. Die Wischbewegung kann auch in einem anderen Bereich des Fahrzeuginnenraums erfolgen, wobei diese von einem Gestik-Erkennungssystem erfasst wird, welches als Sensor eine Videokamera, ein Radarsystem, Ultraschall oder ähnliches nutzt. In jedem Fall kann sich der Finger bzw. die Hand in einer von dem Benutzer beabsichtigten Richtung über die Eingabeeinrichtung bewegen, wobei je nach Spezifikation bzw. gewähltem Betriebsmodus des hier vorgeschlagenen Verfahrens sowohl die Richtung, eine Form als auch eine Länge der Bewegung in die nachfolgende Routenbestimmung einfließen kann. Diese Ausführungsform bietet den Vorteil, dass der Benutzer des Verfahrens nur ein Minimum seiner Aufmerksamkeit auf die Bestimmung einer alternativen Route aufzuwenden braucht, da er anstelle einer Angabe eines bestimmten Koordinatenpunktes zur Bestimmung der Alternativroute lediglich eine ungefähre Bewegung auszuführen braucht, um eine seinen Wünschen entsprechende Routenbestimmung anstoßen zu können. So kann der Benutzer bzw. der Fahrer seine Hauptaufmerksamkeit dem Straßenverkehr widmen und Unfälle aus Unachtsamkeit vermeiden.

In dem Schritt des Erfassens wird erfindungsgemäß eine aus einer Form der Gleitbewegung erzeugte Linie in der digitalen Karte als die Zwischenzieleingabe erfasst.

So kann beispielsweise bei Verwendung lediglich eines Fingers bei der Gleitbewegung ohne Weiteres eine komplexe Linienform erzeugt werden, während die Wischbewegung mit der Hand bestens zur Erzeugung einer Geraden geeignet ist. Mit der Darstellung der erzeugten Linie in der digitalen Karte ergibt sich für den Benutzer des Verfahrens der Vorteil, dass er seine Eingabe mit einem schnellen Blick überprüfen und gegebenenfalls korrigieren kann.

In einer nicht erfindungsgemäßen Ausführungsform kann in dem Schritt des Erfassens die Linie die bevorzugte Region in der digitalen Karte kennzeichnen. Entsprechend kann in dem Schritt des Zuordnens ein die Linie in einer vorbestimmten Entfernung umgebender Ausschnitt aus der digitalen Karte dem der bevorzugten Region zugrunde liegenden Straßennetzbereich zugeordnet werden. Diese Ausführungsform ist besonders geeignet, wenn ein einzelner Finger zur Erzeugung der Linie in der digitalen Karte eingesetzt wird, da hier ein Verlauf der bevorzugten Region, die man durchfahren möchte, sehr genau in der digitalen Karte markiert werden kann. Dies ist von Bedeutung, wenn der Benutzer des Verfahrens z. B. Vorkenntnisse über die bevorzugte Region besitzt und seine Routenbestimmung auf bestimmte Bereiche innerhalb der Region beschränken möchte, oder wenn die gesamte bevorzugte Region einen unregelmäßigen oder mäandernden Verlauf aufweist und der Benutzer sie gerne bei seiner Fahrt maximal auskosten und nicht zu früh verlassen möchte. Der die Linie in einer vorbestimmten Entfernung umgebende Ausschnitt aus der digitalen Karte kann eine geschlossene Umrandung aufweisen, die einen vorgegebenen Abstand zur Linie hat. So kann es ausreichen, dass der Benutzer die Gleitbewegung entlang etwa eines Mittelbereichs der bevorzugten Region ausführt, um einen die gesamte bevorzugte Region in etwa umfassenden Ausschnitt aus der digitalen Karte zu erhalten. Die Entfernung der Umrandung des Ausschnitts von der Linie kann vorgegeben oder durch den Benutzer einstellbar sein. So eignet sich diese Ausführungsform besonders für die Kennzeichnung z. B. einer bevorzugten Region mit komplexem Verlauf. Auch kann das Verfahren in dieser Ausführungsform Anwendung finden, wenn keine ursprüngliche Route existiert.

Erfindungsgemäß verläuft in dem Schritt des Erfassens die Linie quer zu einer ursprünglich ermittelten Route zwischen dem Startpunkt und dem Zielpunkt und einer von zwei Abschnitten einer Kontur einer geschlossenen geometrischen Figur um einen Schnittpunkt zwischen der ursprünglich ermittelten Route und der quer verlaufenden Linie kennzeichnet die bevorzugte Region in der digitalen Karte. Dabei werden die zwei Abschnitte durch einen ersten Schnittpunkt und einen zweiten Schnittpunkt der ursprünglich ermittelten Route mit der Kontur der geschlossenen geometrischen Figur bestimmt. Ferner wird in dem Schritt des Zuordnens ein den einen der zwei Abschnitte in einer vorbestimmten Entfernung umgebender Ausschnitt aus der digitalen Karte dem der bevorzugten Region zugrunde liegenden Straßennetzbereich zugeordnet.

Die Linie kann dabei grob einen rechten Winkel mit der in der digitalen Karte angezeigten ursprünglich ermittelten und Route bilden. Die geschlossene geometrische Figur kann sich aus Geraden und Kreisformen zusammensetzen. Neben der Linie kann auch die Kontur der geschlossenen geometrischen Figur in der digitalen Karte angezeigt werden. Auch hier kann der den Abschnitt der Kontur in einer vorbestimmten Entfernung umgebende Ausschnitt aus der digitalen Karte eine geschlossene Umrandung aufweisen, die einen vorgegebenen Abstand von der Konturlinie hat. Dieser Abstand von der Konturlinie kann durch den Benutzer einstellbar sein. Die Erfindung bietet eine noch weitergehende Vereinfachung der Auswahl der bevorzugten Region durch den Benutzer des Verfahrens und eignet sich besonders für die Variante der Ausführung einer Wischbewegung mit der Hand zum Erzeugen der Linie. Insbesondere kommt die Erfindung einem Bedürfnis des Benutzers nach Vermeidung einer bestimmten Region im Gegensatz zu einer Bevorzugung einer bestimmten Region entgegen. So ist diese Ausführung des Verfahrens sinnvoll, wenn ein z. B. ein Ballungsraum oder ein Streckenabschnitt mit bekannt hoher Staugefahr umfahren werden soll. Der Benutzer kann dabei die Linie so setzen, dass der Schnittpunkt der Linie mit der ursprünglichen Route im Zentrum des Gebiets liegt, das umfahren werden soll. So kann der Benutzer auf einfache und schnelle Weise, z. B. durch Ausführen einer Wischbewegung, um die Linie zu erzeugen, die bevorzugte Region einfach durch Ausschließen einer unerwünschten Region bestimmen, also, ohne die bevorzugte Region explizit angeben zu müssen. Dieses erfindungsgemäße Verfahren ist besonders schnell, sodass der Benutzer des Verfahrens bzw. der Fahrer des Fahrzeugs seine Aufmerksamkeit noch schneller wieder ganz dem Verkehrsgeschehen widmen kann. Zudem können ein Eintrittspunkt in die bevorzugte Region und ein Austrittspunkt aus dieser einfach und automatisch durch die Schnittpunkte der ursprünglich ermittelten Route mit der Kontur der geschlossenen geometrischen Figur bestimmt werden.

Insbesondere repräsentiert erfindungsgemäß in diesem Zusammenhang in dem Schritt des Erfassens die Linie einen Vektor und wird derjenige Abschnitt als der eine von zwei Abschnitten der geschlossenen geometrischen Figur ausgewählt, den ein Endbereich des Vektors kreuzt. So kann auf einfache und schnelle Weise gewährleistet werden, dass derjenige der zwei durch die Schnittpunkte der ursprünglich ermittelten Route mit der Kontur der geometrischen Figur gebildeten Abschnitte in dem Schritt des Zuordnens ausgewählt wird, der die bevorzugte Region kennzeichnet, ohne dass dies eine Aktion des Benutzers erfordert. Die Anwendung des Verfahrens wird somit noch weitergehend vereinfacht.

Gemäß einer Ausführungsform kann in dem Schritt des Erfassens eine Mehrzahl von Gleitbewegungen erfasst werden, wobei eine Anzahl und eine Richtung der Mehrzahl von Gleitbewegungen eine Größe der bevorzugten Region bestimmt. So kann mit jedem Wiederholen der Gleitbewegung in einer selben Richtung - also quasi dem mehrmaligen Erzeugen einer identischen Linie - eine Vergrößerung der geschlossenen geometrischen Figur und damit eine weitere Entfernung der bevorzugten Region von dem Schnittpunkt der ursprünglichen Route mit der durch die Gleitbewegung(en) erzeugten Linie erreicht werden. Dies ist z. B. sinnvoll, wenn der Benutzer des Verfahrens eine noch großräumigere Umfahrung eines Ballungsraumes wünscht. Um diese Eingaben rückgängig zu machen, also die bevorzugte Region wieder näher an die zu meidende Region heranzurücken, kann der Benutzer die Gleitbewegung einfach umkehren und in die entgegengesetzte Richtung ausführen und so die geometrische Figur schrittweise wieder verkleinern. Auch diese Ausführungsform zeichnet sich dadurch aus, dass sie besonders schnell und einfach durchzuführen ist und keine große Aufmerksamkeit des Benutzers erfordert. Sie bietet dem Benutzer zudem noch individuellere Gestaltungsmöglichkeiten des Verfahrens.

Beispielsweise kann in dem Schritt des Erfassens die geschlossene geometrische Figur einen Kreis bilden und der Schnittpunkt zwischen der ursprünglich ermittelten Route und der Linie einen Mittelpunkt des Kreises bilden. Die Verwendung der Kreisform mit dem Schnittpunkt als Kreismittelpunkt eignet sich besonders zum Auswählen eines Ausschnitts aus einem Straßennetz, in dem z. B. ein unerwünschtes Gebiet umfahren werden kann, da so automatisch auf Höhe des Schnittpunktes, also des Zentrums des unerwünschten Gebietes, die größte Entfernung von der ursprünglich ermittelten Route besteht. Zudem lässt sich unter Verwendung der Kreisform auch das anhand der im Vorhergehenden erläuterten Ausführungsform durchzuführende Verlagern der bevorzugten Region nach außen oder innen so in gleichmäßigen Schritten ausführen.

Die vorliegende Erfindung schafft ferner eine Vorrichtung, die ausgebildet ist, um die Schritte des Verfahrens zum Bestimmen einer bevorzugten Route zwischen einem Startpunkt und einem Zielpunkt in entsprechenden Einrichtungen durchzuführen bzw. umzusetzen. Insbesondere kann es sich bei der Vorrichtung um ein Navigationsgerät oder Informationssystem für ein Fahrzeug handeln. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die in Hard- und/oder Software ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen aus eigenen, integrierten Schaltkreisen oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
- Fig. 1: eine Eingabe- und Anzeigeeinrichtung einer Vorrichtung zum Bestimmen einer bevorzugten Route zwischen einem Startpunkt und einem Zielpunkt gemäß einem Ausführungsbeispiel der vorliegenden Erfindung;
- Fig. 2: einen Ausschnitt aus einer Anzeige in der Eingabe- und Anzeigeeinrichtung aus Fig. 1, gemäß einem nicht erfindungsgemäßen Aspekt;
- Fig. 3: einen Ausschnitt aus einer Anzeige in der Eingabe- und Anzeigeeinrichtung aus Fig. 1, gemäß einem Ausführungsbeispiel der vorliegenden Erfindung;
- Fig. 4: ein Ablaufdiagramm eines Verfahrens zum Bestimmen einer bevorzugten Route zwischen einem Startpunkt und einem Zielpunkt gemäß einem Ausführungsbeispiel der vorliegenden Erfindung; und
- Fig. 5: eine Vorrichtung zum Bestimmen einer bevorzugten Route zwischen einem Startpunkt und einem Zielpunkt gemäß einem Ausführungsbeispiel der vorliegenden Erfindung.

In der nachfolgenden Beschreibung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

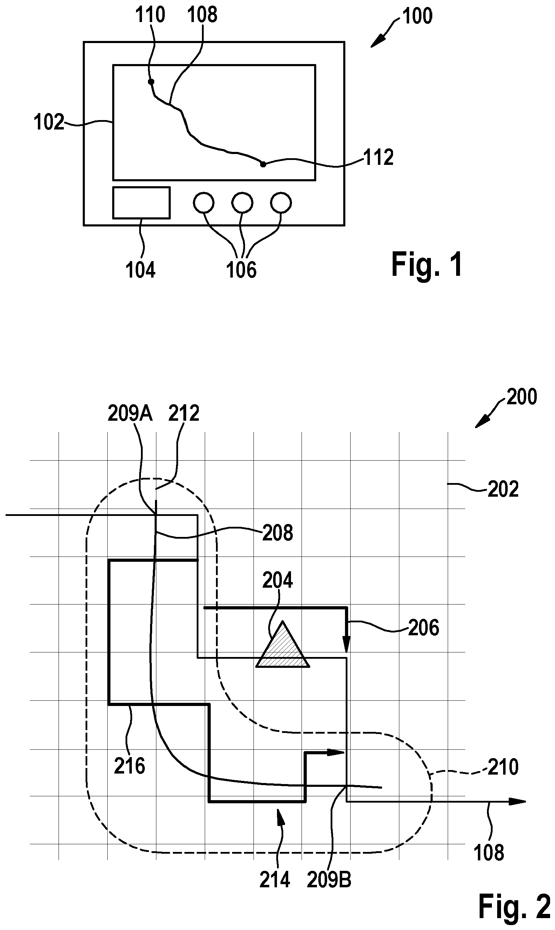

Fig. 1 zeigt ein Ausführungsbeispiel einer Eingabe- und Anzeigeeinrichtung 100 einer Vorrichtung zum Bestimmen einer bevorzugten Route zwischen einem Startpunkt und einem Zielpunkt. Bei der Vorrichtung kann es sich um ein mobiles oder ein in einem Fahrzeug installiertes Navigationssystem bzw. Navigationsgerät handeln. Die Eingabe- und Anzeigeeinrichtung 100 umfasst einen Anzeigebereich mit einem Bildschirm 102 und einen Bedienbereich mit einem Tastfeld 104 und Tasten 106. Der Bildschirm 102 zeigt beispielhaft eine ermittelte Route 108 zwischen einem Startpunkt 110 und einem Zielpunkt 112 an. Die Eingabe- und Anzeigeeinrichtung 100 ist so im Fahrzeug angebracht, dass ein Fahrer des Fahrzeugs bzw. Benutzer der Vorrichtung ungehinderten Blick auf den Anzeigebereich hat und den Bedienbereich gut mit den Fingern erreichen kann.

Fig. 2 zeigt einen Ausschnitt aus einer digitalen Karte 200 gemäß einem nicht erfindungsgemäßen Aspekt, wie er beispielsweise auf dem Bildschirm 102 der Eingabe- und Anzeigeeinrichtung 100 aus Fig. 1 angezeigt sein kann. Ein Straßennetz 202 ist in vereinfachter Form dargestellt. Die digitale Karte 200 zeigt eine weitere beispielhafte Route 108, wie sie von der Vorrichtung bzw. dem Navigationsgerät zwischen einem in der Darstellung nicht gezeigten Startpunkt und einem ebenfalls nicht gezeigten Zielpunkt ermittelt wurde. Ferner zeigt die Zeichnung in Fig. 2 in der digitalen Karte 200 eine beispielhafte Störung 204, z. B. eine Verkehrsstauung, auf der Originalroute 108 und einen "spontanen Bypass", also eine Alternativroute 206, die das Navigationssystem ohne Verwendung des hierin vorgestellten Verfahrens ermittelt. Eine gebogene Linie 208 kennzeichnet eine Zwischenzieleingabe eines Nutzers des hier vorgestellten Verfahrens. Der Nutzer kann die Zwischenzieleingabe z. B. mit dem Zeigefinger direkt auf dem in Fig. 1 gezeigten Bildschirm 102 vornehmen, wenn es sich bei diesem um einen Touchscreen bzw. Berührungsbildschirm handelt. Alternativ kann der Nutzer die Zwischenzieleingabe auch auf dem in Fig. 1 mit dem Bezugszeichen 104 bezifferten Tastfeld bzw. Touchpad vornehmen, mittels dem ein Cursor auf dem Bildschirm 102 bewegt wird, der die Linie 208 in der digitalen Karte 200 erzeugt. Mit der Linie 208 kennzeichnet der Nutzer bzw. Fahrer eine bevorzugte Region, also ein in der digitalen Karte 200 dargestelltes Gebiet, die er auf seiner Fahrt zum Zielort durchfahren möchte.

Wie die Darstellung in Fig. 2 deutlich zeigt, weicht der Routenwunsch des Nutzers von der vorgeschlagenen Alternativroute 206 ab. Gemäß dem hier vorgeschlagenen Verfahren wird entsprechend der mit der Linie 208 gekennzeichneten Zwischenzieleingabe des Nutzers ein in der Zeichnung mit einer Strichlinie gekennzeichneter Ausschnitt 210 aus der digitalen Karte 200 bestimmt. Der von der unterbrochenen Linie eingegrenzte Bereich 210 in der digitalen Karte kennzeichnet somit die z. B. über eine Cursorbewegung vom Nutzer ausgewählte bevorzugte Region. Der Ausschnitt 210 enthält den ersten Berührungspunkt 209A und den zweiten Berührungspunkt 209B mit der ursprünglichen Route 108, sodass ein Eintritts- und ein Austrittspunkt für die alternative Route durch die bevorzugte Region vorliegen. Der Ausschnitt 210 begrenzt einen der bevorzugten Region zugrunde liegenden Straßennetzbereich 212. Dieser wurde verwendet, um z. B. anhand einer vorgegebenen Kostenfunktion einen "bevorzugten Bypass", also eine bevorzugte Route 214, zu errechnen. Die bevorzugte Route 214 setzt sich aus einer Mehrzahl von anhand des Straßennetzbereichs 212 ausgewählten Streckenabschnitten 216 zusammen - von denen der Übersichtlichkeit halber lediglich einer mit einem Bezugszeichen gekennzeichnet ist - und weist einen unter Berücksichtigung von geografischen Gegebenheiten und unter Umständen vorgegebenen Kostenfunktionen optimalen Verlauf durch die vom Benutzer vorgegebene bevorzugte Region auf.

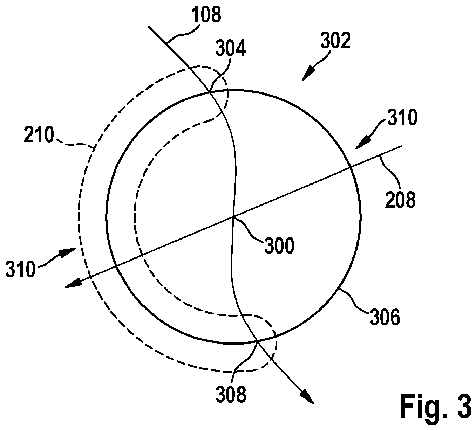

Fig. 3 zeigt ein Ausführungsbeispiel für das hierin vorgestellte Konzept der grafischen Vorgabe zur Berechnung einer Alternativroute. Die Zeichnung zeigt eine mögliche Eingabe des Nutzers bei Verwendung einer zu der anhand der Fig. 2 erläuterten alternativen Eingabemöglichkeit. Gezeigt sind wiederum eine beispielhafte Originalroute 108 und ein aus einer Zwischenzieleingabe des Nutzers resultierendes bevorzugtes Gebiet. Auch hier erzeugt der Nutzer des Verfahrens die Linie 208 auf der die digitale Karte abbildenden Anzeigeeinrichtung des Navigationsgeräts. Bei dem anhand der Darstellung in Fig. 3 vorgestellten Ausführungsbeispiel definiert die durch die Eingabe des Nutzers erzeugte Linie 208 einen Vektor. Der Nutzer zieht den Vektor bzw. die Linie 208 durch einen Ort bzw. ein Gebiet, das er umfahren möchte, und quer zu der ursprünglichen Route 108. Eine Richtung des Vektors 108 kennzeichnet dabei eine Richtung der von dem Nutzer ausgeführten Gleitbewegung zur Erzeugung der Linie 108. Zur Ermittlung der bevorzugten Region wird hier um einen Schnittpunkt 300 zwischen der Originalroute 108 und der Linie 208 eine geschlossene geometrische Figur 302 - hier ein Kreis - angelegt und im Bildschirm des Navigationsgeräts angezeigt. Der Schnittpunkt 300 bildet hier auch den Mittelpunkt des Kreises 302. Ein erster Schnittpunkt 304 einer Kontur 306 des Kreises 302 mit der ursprünglichen Route 108 und ein zweiter Schnittpunkt 308 der Kontur 306 des Kreises 302 mit der ursprünglichen Route 108 definieren zwei Abschnitte 310 der Kontur 306. Die Schnittpunkte 304, 308 entsprechen den Berührungspunkten 209A und 209B aus Fig. 2 und kennzeichnen einen Eintritts- und Austrittspunkt für die zu berechnende alternative Route. Der Abschnitt 310, den ein Endbereich des Vektors 208 schneidet, wird als die bevorzugte Region erkannt - hier der Darstellung der linke Abschnitt 310. Es wird in einer vorbestimmten Entfernung um die Kontur 306 des ausgewählten Abschnitts 310 herum der wiederum mittels einer unterbrochenen Linie gekennzeichnete Ausschnitt 210 aus der digitalen Karte bestimmt, dem wiederum ein Bereich des Straßennetzes zur Ermittlung einer alternativen Route zugrunde gelegt ist. Das anhand der Fig. 3 erläuterte Ausführungsbeispiel eignet sich besonders für eine großräumige Umfahrung eines Ortes.

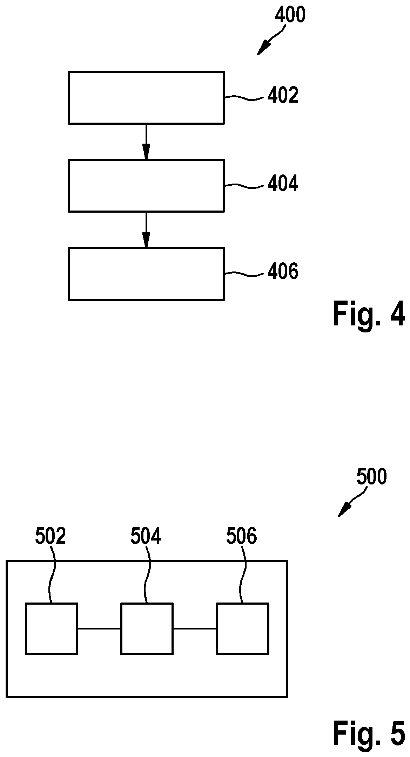

Fig. 4 zeigt ein Ablaufdiagramm eines Ausführungsbeispiels eines Verfahrens 400 zum Bestimmen einer bevorzugten Route zwischen einem Startpunkt und einem Zielpunkt. In einem Schritt 402 wird eine Eingabe in eine das Verfahren ausführende Vorrichtung erfasst, bei der ein Nutzer des Verfahrens 400 ein Zwischenziel auf einer Fahrt zwischen einem Startpunkt und einem Zielpunkt in einer digitalen Karte kennzeichnet. Die Zwischenzieleingabe kennzeichnet eine vom Nutzer bevorzugte Region, die er auf seiner Fahrt durchfahren möchte und die unter Umständen von einer vom Navigationsgerät berechneten Originalroute abweicht. Alternativ können in dem Schritt 402 Daten über eine bereits durchgeführte Eingabe des Nutzers als die Zwischenzieleingabe über eine geeignete Schnittstelle erfasst werden. In einem folgenden Schritt 404 wird die Zwischenzieleingabe einem der bevorzugten Region zugrunde liegenden Bereich eines von der digitalen Karte umfassten Straßennetzes zugeordnet, beispielsweise unter Verwendung eines geeigneten Algorithmus. Der der Zwischenzieleingabe zugeordnete Straßennetzbereich umfasst einen oder mehrere Streckenabschnitte, die in einem folgenden Schritt 406 verwendet werden, um die bevorzugte Route zu bilden.

Im Folgenden sei das hierin vorgestellte Verfahren nochmals anhand einer beispielhaften Handlungsfolge eines das Verfahren anwendenden Fahrers eines Fahrzeugs erläutert, wobei auf die im Vorhergehenden erläuterten Figuren zusätzlich Bezug genommen wird und auch mögliche Alternativen aufgezeigt werden.

Der Nutzer meldet seinen Wunsch nach Berechnung einer Alternativroute 214 an. Dies kann durch einfachen Tastendruck auf eine vordefinierte Taste 106 erfolgen. Eventuell ist diese Taste 106 Element eines Touchscreens bzw. Berührungsbildschirms 102 oder diesem zugeordnet. Die digitale Kartendarstellung 200 des Navigationssystems ist nun in einem Modus, der die Aufnahme einer vom Nutzer bevorzugten Region für die Alternativroute 214 zulässt. Hierbei sind die ursprünglich berechnete Route 108 und eine eigene Position auf der Route 108 für den Nutzer sichtbar und hervorgehoben. Eventuell sind auf der ursprünglichen Route 108 gemeldete aktuelle oder zukünftig relevante Störungen 204 markiert; eine Ausweichroute ist jedoch noch nicht berechnet. Der Nutzer gibt über die Kartendarstellung 200 die von ihm gewünschte Region an, die für die Alternativroute berücksichtigt werden soll.

In einer nicht erfindungsgemäßen Variante erfolgt dies, wie anhand der Darstellung in Fig. 2 erläutert, z. B. über das Ziehen eines Cursors über die Kartendarstellung 200 oder durch eine Bewegung über den Touchscreen 102. Hierbei wird eine Umgebung 210 - z. B. 5 km - um eine gewählte Bahn 208 des Cursors in der digitalen Karte 200 erfasst, der gewünschten Region zugerechnet und mittels eines die bevorzugte Region umfassenden Ausschnitts 210 aus der digitalen Karte 200 angezeigt.

Erfindungsgemäß wird gemäß der in Fig. 3 beschriebenen Variante vorgegangen, indem die Eingabe durch Ziehen des Cursors bzw. durch Ausführen einer Wischbewegung auf dem Touchscreen 102 senkrecht zum aktuellen Routenverlauf 108 erfolgt. Bei der erfindungsgemäßen Variante wird vom System lediglich die Information ausgewertet, ob die Ausweichroute rechts oder links von der ursprünglichen Route 108 liegen soll und wo sich der Mittelpunkt des zu umfahrenden Gebietes befindet. Dieser ergibt sich aus dem Schnittpunkt 300 der durch die Eingabe des Nutzers definierten Linie 208 und der ursprünglichen Route 108. Das bevorzugte Gebiet wird automatisch berechnet. Dazu wird ein Kreis 302 um den Mittelpunkt 300 des zu umfahrenden Gebietes gelegt. Die Schnittpunkte 304, 308 der ursprünglichen Route 108 mit dem Kreis 302 definieren mindestens zwei Kreissegmente 310. Sofern es mehr als zwei Schnittpunkte gibt, werden nur der erste Schnittpunkt 304 und der letzte Schnittpunkt 308 der Route 108 mit dem Kreis 302 zur Definition der Kreissegmente 310 herangezogen. Damit sind immer genau zwei Kreissegmente 310 definiert. Je nach Eingabe des Nutzers wird entweder das rechts oder das links von der Route 108 liegende Kreissegment 310 gewählt. Die bevorzugte Region ergibt sich dann als Menge der Punkte, die einen gewissen Abstand zu dem gewählten Kreissegment 310 nicht überschreiten, und wird wiederum in einen entsprechend geformten Ausschnitt 210 aus der digitalen Karte umgerechnet. Anstatt eines Kreises kann auch eine Ellipse oder eine andere geometrische Form zur Festlegung des Gebietes verwendet werden. Bei dieser Variante ist außerdem eine Eingabe über eine Gestik möglich, z. B. über eine Wischbewegung mit der Hand nach rechts oder nach links. Tätigt der Nutzer die alternative Eingabe mehrmals hintereinander, so wird bei jeder Eingabe eine großräumigere Umfahrung des zu umfahrenden Gebietes in der vom Nutzer vorgegebenen Richtung vorgeschlagen. Dies wird erreicht, indem der Radius des Kreises zur automatischen Berechnung des bevorzugten Gebietes bei jeder gleichartigen Eingabe vergrößert wird. Mit einer Eingabe in die Gegenrichtung wird wieder eine entsprechend kleinräumigere Umfahrung gewählt. Dies erfolgt durch eine Verkleinerung des Radius. Damit eine Alternativroute berechnet werden kann, ist es erforderlich, dass die ausgewählte Region die ursprüngliche Route 108 mindestens zweimal berührt, nämlich für mindestens einen Austritts- und einen Eintrittspunkt, wobei hier der erste Schnittpunkt 304 den Eintrittspunkt in die Alternativroute definiert und der zweite Schnittpunkt 308 den Austrittspunkt aus der Alternativroute definiert. Andernfalls wird in der Regel die ursprüngliche Route nochmals ermittelt. Eine Kontur des bevorzugten Gebietes kann, falls der Nutzer den Cursor in die Nähe der Ursprungsroute 108 steuert, von der Ursprungsroute 108 "angezogen" werden, sodass die Bedienung noch weitergehend vereinfacht wird und die zuvor genannte Bedingung durch den Benutzer leichter erfüllt werden kann. Eine Abgrenzung der durch den Kartenausschnitt 210 gekennzeichneten Region kann abrupt sein oder es können mit einer vorgegebenen nach außen hin fallenden Funktion in der digitalen Straßenkarte 200 enthaltene Elemente bevorzugt werden.

Ist die Eingabe der bevorzugten Region abgeschlossen, z. B., indem vom System der zweite Berührungspunkt 308 erkannt wurde, erfolgt die Berechnung der Alternativroute 214 und deren Darstellung auf der Ausgabe 100 des Systems. Zusätzlich zur grafischen Kartendarstellung der Alternativroute 214 ist eine Darstellung des Kostenaufwandes (errechneter zusätzlicher Zeit-, Weg- oder Energieaufwand) möglich und sinnvoll. Für die bevorzugte Region kann eine von einer ursprünglichen Kostenfunktion abweichende Kostenfunktion gewählt werden, beispielsweise kann die schnellste Route statt wie ursprünglich die kürzeste Route bestimmt werden. Die Eingabe der bevorzugten Region kann auch ohne Existenz einer ursprünglichen Route 108 erfolgen, wenn der Startpunkt 110 und der Zielpunkt 120 gegeben sind und innerhalb der bevorzugten Region liegen. Der Nutzer bestätigt die auf dem Display 102 angezeigte Alternativroute 214. Dies kann durch einfachen Tastendruck auf eine vordefinierte Taste 106 erfolgen. Eventuell ist diese Taste 106 Element eines Touchscreens 102 oder diesem zugeordnet.

Fig. 5 zeigt ein Ausführungsbeispiel einer Vorrichtung 500 zum Bestimmen einer bevorzugten Route zwischen einem Startpunkt und einem Zielpunkt. Die Vorrichtung 500 kann in einem Fahrzeug in Form eines Navigationssystems installiert sein oder mit einem im Fahrzeug installierten Navigationssystem verbunden sein. Zur Umsetzung der individuellen Routeneingabe umfasst die Vorrichtung 500 eine Einrichtung 502 zum Erfassen einer Zwischenzieleingabe eines Nutzers, z. B. eines Fahrers des Fahrzeugs. Ferner umfasst die Vorrichtung 500 eine Einrichtung 504 zum Zuordnen der Zwischenzieleingabe zu einem Straßennetzbereich in einer in dem Fahrzeug vorliegenden digitalen Karte. Weiterhin umfasst die Vorrichtung 500 eine Einrichtung 506 zum Verwenden zumindest eines in dem Straßennetzbereich enthaltenen Streckenabschnitts der digitalen Karte, um die bevorzugte Route zu bestimmen.

Die im Vorhergehenden vorgestellte Erfindung ist in allen Produkten einsetzbar, die eine Zieleingabe zur Routenberechnung enthalten und über entsprechende Eingabegeräte verfügen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Verfahren (400) zum Bestimmen einer bevorzugten Route (214) zwischen einem Startpunkt (110) und einem Zielpunkt (112), wobei das Verfahren die folgenden Schritte aufweist:
Erfassen (402) einer auf eine digitale Karte (200) bezogenen Zwischenzieleingabe eines Benutzers, wobei die Zwischenzieleingabe einen Wunsch des Benutzers nach einem Durchfahren einer in der digitalen Karte dargestellten bevorzugten Region zwischen dem Startpunkt und dem Zielpunkt repräsentiert;
Zuordnen (404) der Zwischenzieleingabe zu einem der bevorzugten Region zugrunde liegenden Straßennetzbereich (212) in der digitalen Karte; und
Verwenden (406) zumindest eines in dem Straßennetzbereich enthaltenen Streckenabschnitts (216) in einer Routenbestimmung zwischen dem Startpunkt und dem Zielpunkt, um die bevorzugte Route zu bestimmen; wobei
in dem Schritt des Erfassens (402) eine Gleitbewegung mindestens eines Fingers des Benutzers über eine Eingabeeinrichtung (100) erfasst wird,
**dadurch gekennzeichnet, dass**
eine aus einer Form der Gleitbewegung erzeugte Linie (208) in der digitalen Karte (200) als eine Zwischenzieleingabe erfasst wird, wobei die Linie (208) quer zu einer ursprünglich ermittelten Route (108) zwischen dem Startpunkt (110) und dem Zielpunkt (112) verläuft und einer von zwei Abschnitten (310) einer Kontur (306) einer geschlossenen geometrischen Figur (302) um einen Schnittpunkt (300) zwischen der ursprünglich ermittelten Route und der Linie (208) die bevorzugte Region in der digitalen Karte (200) kennzeichnet, wobei die zwei Abschnitte durch einen ersten Schnittpunkt (304) und einen zweiten Schnittpunkt (308) der ursprünglich ermittelten Route mit der Kontur der geschlossenen geometrischen Figur bestimmt werden, und bei dem in dem Schritt des Zuordnens (404) ein den einen der zwei Abschnitte in einer vorbestimmten Entfernung umgebender Ausschnitt (210) aus der digitalen Karte (200) dem der bevorzugten Region zugrunde liegenden Straßennetzbereich (212) zugeordnet wird, und wobei in dem Schritt des Erfassens (402) die Linie (208) einen Vektor repräsentiert und derjenige Abschnitt als der eine von zwei Abschnitten der geschlossenen geometrischen Figur ausgewählt wird, den ein Endbereich des Vektors kreuzt.

2. Verfahren (400) gemäß einem der vorangegangenen Ansprüche, bei dem in dem Schritt des Erfassens (402) eine Mehrzahl von Gleitbewegungen erfasst wird, wobei eine Anzahl und eine Richtung der Mehrzahl von Gleitbewegungen eine Größe der bevorzugten Region bestimmt.

3. Verfahren (400) gemäß einem der Ansprüche 1 bis 2, bei dem in dem Schritt des Erfassens (402) die geschlossene geometrische Figur (302) einen Kreis bildet und der Schnittpunkt (300) zwischen der ursprünglich ermittelten Route (108) und der Linie (208) einen Mittelpunkt des Kreises bildet.

4. Vorrichtung (500) zum Bestimmen einer bevorzugten Route (214) zwischen einem Startpunkt (110) und einem Zielpunkt (112), die ausgebildet ist, um die Schritte eines Verfahrens (400) gemäß einem der Ansprüche 1 bis 3 in geeigneten Einrichtungen (502, 504, 506) durchzuführen.

5. Computer-Programmprodukt mit Programmcode zur Durchführung des Verfahrens (400) zum Bestimmen einer bevorzugten Route (214) zwischen einem Startpunkt (110) und einem Zielpunkt (112) nach einem der Ansprüche 1 bis 3, wenn das Programmprodukt auf einer Vorrichtung (500) ausgeführt wird.

## Claims

1. Method (400) for determining a preferred route (214) between a staring point (110) and a destination (112), wherein the method has the following steps:
capturing (402) an intermediate destination input, referenced to a digital map (200), by a user, wherein the intermediate destination input represents a requirement of the user after travelling through a preferred region, depicted in the digital map, between the starting point and the destination;
assigning (404) the intermediate destination input to a road network area (212), on which the preferred region is based, in the digital map; and
using (406) at least one route section (216), contained in the road network area, in a route determination between the starting point and the destination in order to determine the preferred route;
wherein
the capture step (402) involves a sliding movement by at least one finger of the user being captured by means of an input device (100),
**characterized in that**
a line (208), produced from a shape of the sliding movement, in the digital map (200) is captured as an intermediate destination input, wherein the line (208) runs transversely with respect to an originally ascertained route (108) between the starting point (110) and the destination (112), and one of two sections (310) of a contour (306) of a closed geometric figure (302) around a point of intersection (300) between the originally ascertained route and the line (208) denotes the preferred region in the digital map (200), wherein the two sections are determined by a first point of intersection (304) and a second point of intersection (308) between the originally ascertained route and the contour of the closed geometric figure, and in which the assignment step (404) involves a detail (210) from the digital map (200), which detail surrounds one of the two sections at a predetermined distance, being assigned to the road network area (212) on which the preferred region is based, and wherein the capture step (402) involves the line (208) representing a vector and that section that an end area of the vector crosses being selected as the one of two sections of the closed geometric figure.

2. Method (400) according to one of the preceding claims, in which the capture step (402) involves a plurality of sliding movements being captured, wherein a number and a direction of the plurality of sliding movements determines a size of the preferred region.

3. Method (400) according to either of Claims 1 and 2, in which the capture step (402) involves the closed geometric figure (302) forming a circle and the point of intersection (300) between the originally ascertained route (108) and the line (208) forming a centre of the circle.

4. Apparatus (500) for determining a preferred route (214) between a starting point (110) and a destination (112), designed to perform the steps of a method (400) according to one of Claims 1 to 3 in suitable devices (502, 504, 506).

5. Computer program product having program code for performing the method (400) for determining a preferred route (214) between a starting point (110) and a destination (112) according to one of Claims 1 to 3 when the program product is executed on an apparatus (500).

## Revendications

1. Procédé (400) pour déterminer un itinéraire préféré (214) entre un point de départ (110) et un point de destination (112), dans lequel le procédé comprend les étapes consistant à :
détecter (402) une entrée de destination intermédiaire d'un utilisateur par rapport à une carte numérique (200), dans lequel l'entrée de destination intermédiaire représente un souhait de l'utilisateur de se déplacer à travers une région préférée représentée dans la carte numérique entre le point de départ et le point de destination ;
associer (404) l'entrée du point de destination intermédiaire à une zone (212) du réseau routier inhérente à la région préférée dans la carte numérique ; et
utiliser (406) au moins un tronçon d'itinéraire (216) contenu dans la zone du réseau routier dans une détermination d'itinéraire entre le point de départ et le point de destination afin de déterminer l'itinéraire préféré ;
dans lequel, lors de l'étape de détection (402), un mouvement de glissement d'au moins un doigt de l'utilisateur est détecté par l'intermédiaire d'un dispositif de saisie (100),
**caractérisé en ce qu'**une ligne (208) générée sur la carte numérique (200) à partir d'une forme dudit mouvement de glissement est détectée en tant qu'entrée de destination intermédiaire, dans lequel la ligne (208) s'étend transversalement à un itinéraire initialement déterminé (108) entre le point de départ (110) et le point de destination (112), et l'un de deux tronçons (310) d'un contour (306) d'une figure géométrique fermée (302) entourant un point d'intersection (300) entre l'itinéraire initialement déterminé et la ligne (208) caractérise la région préférée dans la carte numérique (200), dans lequel les deux tronçons sont déterminés par un premier point d'intersection (304) et un second point d'intersection (308) de l'itinéraire initialement déterminé avec le contour de la figure géométrique fermée, et dans lequel, lors de l'étape d'association (404), un tronçon (210) provenant de la carte numérique (200) et entourant ledit un des deux tronçons à une distance prédéterminée, est associé à la zone (212) du réseau routier inhérente à la région préférée, et dans lequel, lors de l'étape de détection (402), la ligne (208) représente un vecteur et le tronçon qui est sélectionné comme étant l'un des deux tronçons de la figure géométrique fermée passe par ladite zone d'extrémité du vecteur.

2. Procédé (400) selon l'une des revendications précédentes, dans lequel, lors de l'étape de détection (402), une pluralité de mouvements de glissement est détectée, dans lequel un nombre et une direction de la pluralité de mouvements de glissement déterminent une taille de la région préférée.

3. Procédé (400) selon l'une des revendications 1 et 2, dans lequel, lors de l'étape de détection (402), la figure géométrique fermée (302) forme un cercle et le point d'intersection (300) entre l'itinéraire initialement déterminé (108) et la ligne (208) forme un centre du cercle.

4. Dispositif (500) permettant de déterminer un itinéraire préféré (214) entre un point de départ (110) et un point de destination (112), qui est conçu pour mettre en oeuvre les étapes d'un procédé (400) selon l'une des revendications 1 à 3 dans des moyens (502, 504, 506) appropriés.

5. Produit de programme informatique comportant un code de programme permettant de mettre en oeuvre le procédé (400) de détermination d'un itinéraire préféré (214) entre un point de départ (110) et un point de destination (112) selon l'une des revendications 1 à 3 lorsque le produit de programme est exécuté sur un dispositif (500).
